# EUROPEAN PATENT SPECIFICATION

(11) **EP 1 649 790 B1**
(45) Date of publication and mention of the grant of the patent: **29.09.2010**
(21) Application number: 05256454.9
(22) Date of filing: 18.10.2005
(51) Int. Cl.: A47J 27/21

(54) **Temperature control in liquid heating vessels**
Temperaturregelung für Wasserkocher
Régulation de la temperature pour bouilloire

(30) Priority: 21.10.2004 GB 0423433
(43) Date of publication of application: 26.04.2006
(73) Proprietor: STRIX LIMITED, Ronaldsway, Isle of Man IM9 2RG (GB)
(72) Inventor: Scott, Michael James, Isle of Man, IM9 5PH (GB)
(74) Representative: Samuels, Adrian James

(56) References cited:
- EP-A- 1 651 009
- WO-A-95/34187
- GB-A- 2 308 743

## Description

This invention relates to the regulation of temperature of the liquid in a liquid heating vessel, for example to maintain water at a temperature below boiling suitable for making coffee.

Liquid heating vessels with a keep-warm function are well-known in the art. Some arrangements provide a first main heater to provide primary heating to the liquid and a second, lower power heater to keep the water at or around the desired temperature.

Alternatively, a single heating element may be provided with a suitable thermostatic control which cycles the element on and off to keep the liquid at about the right temperature. The latter arrangement is generally more cost-effective since it does not require an additional element to be provided but does suffer from some drawbacks.

One problem associated with this arrangement is that the thermostatic control used to sense the temperature of the water tends to employ snap-acting bimetallic actuators or creep action bimetals with an over-centre mechanism, which have an inherent hysterisis - that is to say although they may be designed to operate to interrupt power to the element when the target water temperature is reached, the bimetal will not remake i.e. snap back to its original configuration, to re-establish the power supply to the element, until the thermostatic control has cooled by several degrees. This will only happen when the water has cooled by the same amount and therefore the temperature of the water will fluctuate by 20°C or more even though the average temperature may match the target temperature.

Furthermore, there is the problem that when the power to the heating element is switched off, the water will continue to be heated by the heat energy stored in the element and heater plate, etc.. However, the actual effect this has on water temperature will depend upon the corresponding thermal mass of the water and therefore on its volume. Thus in prior art arrangements not only is there a relatively large fluctuation in temperature of the water, but the amount of fluctuation is dependent upon the actual volume which the user has decided to heat.

GB-A-2 308 743 discloses the features recited in the preamble of claim 1.

It is an object of the present invention to provide an improvement upon such arrangements and when viewed from a first aspect the invention provides a heater for a liquid heating vessel comprising a heater plate for closing an opening in the base of the vessel and a heating element formed on or mounted to the underside of the heater plate, the heater further comprising an automatically resettable thermally sensitive actuator arranged to reduce or interrupt power to the heating element at a first temperature and to re-establish power at a second lower temperature, characterised in that said second temperature is below the boiling point of the liquid and wherein said actuator is arranged in direct thermal contact with the heating element.

Thus it will be seen by those skilled in the art that in accordance with the present invention, the temperature of the heating element is sensed rather than the temperature of the liquid. This is highly counterintuitive when the object is to achieve better control of the temperature of the liquid. However, the Applicant has appreciated that by employing an arrangement in accordance with the invention and arranging for the reset temperature of the actuator to correspond to the desired temperature of the liquid, more precise regulation of the temperature of the liquid is achieved. This will be explained below.

When the heater is energised, it will rapidly rise in temperature thus operating the actuator. The heat in the element and heater plate will then transfer into the liquid until the heater has been cooled down to the reset temperature of the actuator. The actuator will therefore reset and re-energise the heater which will again heat up rapidly and switch off after a short time.

Again, the heat from the element and plate will pass into the liquid until the element is once again cooled to the reset temperature of the actuator. This will continue until the element and liquid are in thermal equilibrium marginally above the reset temperature of the actuator. Thus by making the reset temperature of the actuator the target temperature of the liquid, the liquid will be brought accurately to the target temperature.

However, since only a small amount of heat is put into the water in each cycle there is no problem of thermal overshoot and the liquid need cool by only a few degrees before the element cools by the same amount to reset the actuator and provide another small burst of heat. Moreover, it will be appreciated that the temperature of the liquid will be brought to the target temperature exponentially since the time it takes for the element to cool down in each cycle will depend upon the temperature of the water relative to the reset temperature of the actuator.

Significantly, it will also now be appreciated that the average temperature reached is not dependent upon the volume of liquid being heated.

The arrangement described thus far is capable of heating the liquid from room temperature to the target temperature. However, the arrangement will work equally well if the initial temperature of the water is higher than the target temperature. For example, the water may be boiled first in which case the arrangement in accordance with the invention will simply allow the water to cool down until the target temperature is reached whereafter the liquid will be maintained at this temperature to within a close tolerance. Where the target temperature is relatively closer to boiling than to room temperature e.g. in the range 80-85°C for making coffee, the target temperature may be achieved more quickly by boiling the water first. Thus, in some preferred embodiments, a boiling sensitive control is also provided in parallel with the thermally sensitive actuator of the invention to heat the liquid to boiling initially. Any suitable method of detecting boiling and interrupting the power thereafter may be employed - e.g. a steam sensitive switch or a thermal sensor associated with a sump. Of course, it may be desirable for other reasons to boil the water first e.g. for killing bacteria therein.

The Applicant has also devised a further arrangement for reducing the time taken to reach the target temperature when the liquid is being heated from room temperature. Thus in accordance with some preferred embodiments, a second thermal sensor is arranged to be in good thermal contact with the liquid in the vessel, said second sensor having an associated pair of switch contacts and being arranged to cause said switch contacts to open at a temperature below the reset temperature of the first actuator.

In such an arrangement, the second pair of switch contacts may be placed in parallel with those associated with the first actuator which will cause the element to heat the liquid continuously until the liquid reaches the lower temperature. The second pair of contacts will then open and the first actuator will take over regulation of the liquid temperature. By this expedient, the temperature of the liquid can be brought close to the target temperature rapidly and then brought in accurately to the correct temperature by the inventive arrangement. Of course, there will be a thermal overshoot associated with switching off the element by means of the second pair of contacts although the effect of this will be relatively minor since it will only occur once. The second set of contacts could, in a preferred example, be arranged to de-energise the element at a temperature which is below the target temperature by an amount corresponding to the thermal overshoot encountered when the vessel is say half full.

The second thermal sensor need not comprise an actuator, for example it could be a thermistor or thermocouple, but preferably an actuator is employed, more preferably a bimetallic actuator and most preferably a snap acting bimetallic actuator. The second sensor could be in good thermal contact with the liquid in the vessel through the heater plate. Preferably however it is arranged in more direct contact with the water - e.g. by being mounted on a side wall of the vessel or on the base of the vessel outwardly of the heater. The contacts associated with the second sensor could be arranged to be reclosable if the temperature falls or could instead be arranged to be latched open, requiring a manual reset.

The actuator in thermal contact with the heating element in accordance with the invention could have a fixed operating and remake temperature, e.g. a so-called button thermostat. Alternatively, it could be part of a variable thermostat arrangement such that the target temperature for the liquid may be varied. In one convenient embodiment, the actuator is provided as part of a so-called "iron stat" which is a variable temperature thermostat arrangement well known for regulating the temperature of electric irons. In such arrangements a creep action bimetallic strip is operatively coupled with an over-centre bistable latch arrangement. Thus the bimetallic strip does not itself have an inherent operation or reset temperature. The term actuator is thus intended to be interpreted broadly to include any mechanism or arrangement which when taken as a whole, is both thermally sensitive and acts on a set of contacts.

The actuator or actuator arrangement may be in direct physical contact with the heating element or may be in contact by means of a suitable thermal link. Such a thermal link will, however, be in lesser, if any, thermal contact with the heater plate so that the actuator predominantly experiences the temperature of the heating element.

It will be appreciated of course that further actuators may be provided to provide ordinary safety protection in the event of the heater seriously overheating - e.g. a further bimetallic actuator or thermal fuse.

Preferably the element is a sheathed heating element.

Certain embodiments of the invention will now be described, by way of example only, with reference to the accompanying drawings in which:
Fig. 1 is a perspective view of the underside of a heater embodying the invention;
Fig. 2 is a graph of temperature against time achieved during operation of a heater similar to that in Fig. 1;
Fig. 3 is a view of the underside of a heater in accordance with a second embodiment;
Fig. 4 is a close up view of the thermostat shown in Fig. 3;
Fig. 5a is a perspective view of a third embodiment of the invention;
Fig. 5b is a sectional view on AA of Fig. 5a;
Fig. 6 is a schematic sketch of a fourth embodiment of the invention;
Fig. 7 is a schematic circuit diagram for the embodiment of Fig. 6; and
Fig. 8 is a graph of temperature against time for the water contained in the vessel of Fig. 6.

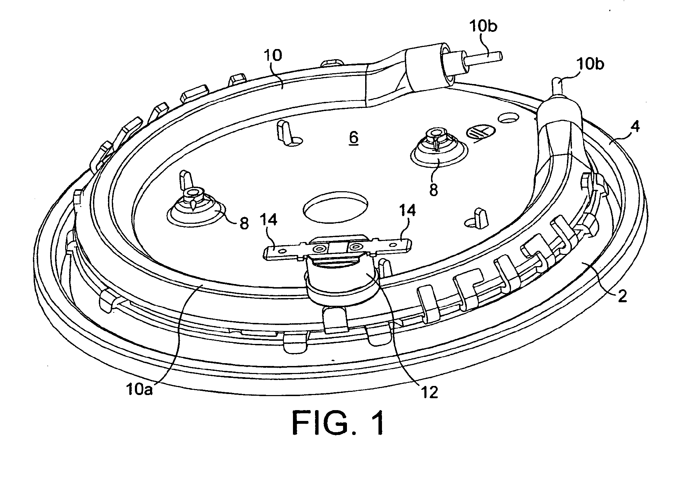

Turning to Fig. 1, there may be seen a standard underfloor heating arrangement which is well known per se in the art. Briefly the heater comprises a stainless steel heater plate 2 which is shaped so as to be able to close an opening in the base of a liquid heating vessel. This is achieved by means of a peripheral channel 4 which can be clamped over a depending bottom edge of the vessel wall in accordance with the Applicant's well known Sure Seal arrangement. Further details of this are given in WO 96/18331.

An aluminium diffuser plate 6 is brazed onto the flat centre portion of the underside of the heater plate 2 and is provided with threaded mounting bosses 8 for mounting a control unit thereto. A tubular sheathed resistance heating element 10 is brazed onto the lower face of the diffuser plate 6 at the periphery thereof. The heating element could for example be rated at between 2 to 3 kilowatts which is suitable for the rapid heating of water to boiling.

It will be seen that the lowermost surface of the heater 10a (when viewed in the "in-use" configuration) is flat. A self-contained thermostatic switch unit 12, commonly known as a buttonstat is mounted on the flat surface 10a of the element so as to be in good thermal contact therewith. It could for example be mounted by a bracket or control unit screwed to the threaded bosses 8. Such devices contain a snap-acting bimetallic actuator arranged to open a pair of electrical contacts, connected to two spade terminals 14, when the operating temperature of the thermostat is reached. The contacts will then be held open until the thermostat 12 cools down to the lower reset temperature of the integral bimetal, when they will be allowed to close again.

Although electrical connections are omitted from this Figure for purposes of clarity, the thermostat 12 is connected electrically in series between the line side of the mains electrical power supply and one of the electrical terminations or cold tails 10b of the element. When operated therefore the thermostat 12 will cut-off the supply of electrical power to the element 10.

Also not shown is a control unit which includes a steam operated bimetallic actuator ("steam blade") which acts to open a pair of contacts connected in parallel with the thermostat 12 and a further backup thermal sensor e.g. a thermal fuse to interrupt power to the element 10 in the event of a serious overheat.

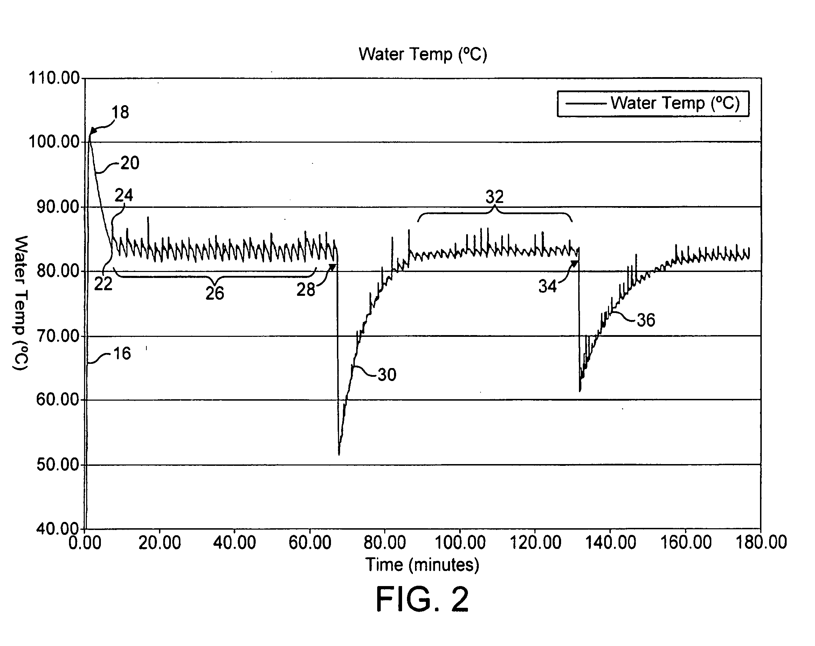

Operation of the heater shown in Fig. 1 will now be described with reference to Fig. 2.

Fig. 2 shows a graph of water temperature on the vertical axis against time in minutes on the horizontal axis for a vessel of nominal capacity 1.7 litres with a heater as described with reference to Fig. 1 in the base thereof. The element of the heater is rated at approximately 3kW. The thermostat 12 has an operating temperature of 150°C and a reset temperature of 82°C.

At first, 0.5 litres of cold water is placed into the vessel and the heater is energised. As shown by the steep gradient of the first phase of the heating curve 16, the water is initially heated very rapidly by continuous energisation of the heating element so that its temperature rises from its initial temperature to 100°C i.e. boiling in a matter of a minute or so.
During the initial heating phase 16, the thermostat 12 is ineffective since the contacts associated with the steam blade are connected across it. As the water boils, steam is generated and this is conducted to the steam blade which operates to trip open its associated set of contacts. During energisation of the heater, the typical running temperature will be somewhere in the region of 250°C and thus the thermostat contacts will remain open as the water and the heating element 10 cool during the cooling phase 20.

When the element 10 has cooled to 82°C again as shown at the point 22 on the graph, the thermostat 12 will reset thereby reclosing its electrical contacts and energising the element. The temperature of the element will thus once again rapidly increase to 250°C thereby causing the thermostat 12 just as quickly to operate once again and open its contacts. Thus although the element has a high power rating and increases rapidly in temperature, it is only operated for a very short time and so the consequent rise in the water temperature is only a few degrees as shown by the short spike 24.

Once the element is switched off again, it soon achieves thermal equilibrium with the water once more as they both cool down to 82°C for the cycle to started again.

As will be seen from the next phase of the graph 26, the temperature of the water may be maintained to within a few degrees of the target temperature of 82°C indefinitely. Particularly when it is appreciated that the vertical axis of this graph is offset and magnified, it will be appreciated that the temperature achieved is remarkably stable. Significantly, it is not tied to the inherent hysteresis of the bimetallic actuator but rather it is a function of the thermal mass of the element 10, diffuser plate 6 and heater plate 2.

Looking further along the graph, at point 28 a further 0.5 litres of cold water is added. This has in the instantaneous effect of reducing the bulk temperature of the water in the vessel to just over 50°C but thereafter the temperature rises in an approximately negative exponential curve 30 back to the target temperature of approximately 82°C. The spikes on this exponential curve 30 are accounted for by the fact that the heating actually takes place in a series of rapid bursts in which the element 10 is energised and then rapidly de-energised as it reaches running temperature but is cooled relatively quickly by the water in the vessel so that it is re-energised again.

Of course, the rate at which the element 10 is cooled by water in the vessel decreases as the water in the vessel approaches the temperature at which the heater is energised, i.e. the reset temperature of the thermostat 12 (82°C), which accounts for the exponential shape of the graph. Again, during the next phase 32 the temperature remains around 82°C indefinitely. In fact, the greater volume of water means that the fluctuations in temperature are even smaller than during the initial keep-warm phase 26.

At point 34 a further 0.5 litres of water is added so that the vessel now contains 1.5 litres. Again, an initial (but smaller) drop in temperature of the bulk liquid is experienced followed by a negative exponential heating rise 36. It will be noted that once again the temperature rises automatically to the target temperature.

It has thus been demonstrated that in accordance with the invention a stable temperature may be maintained indefinitely regardless of the volume of water in the vessel.

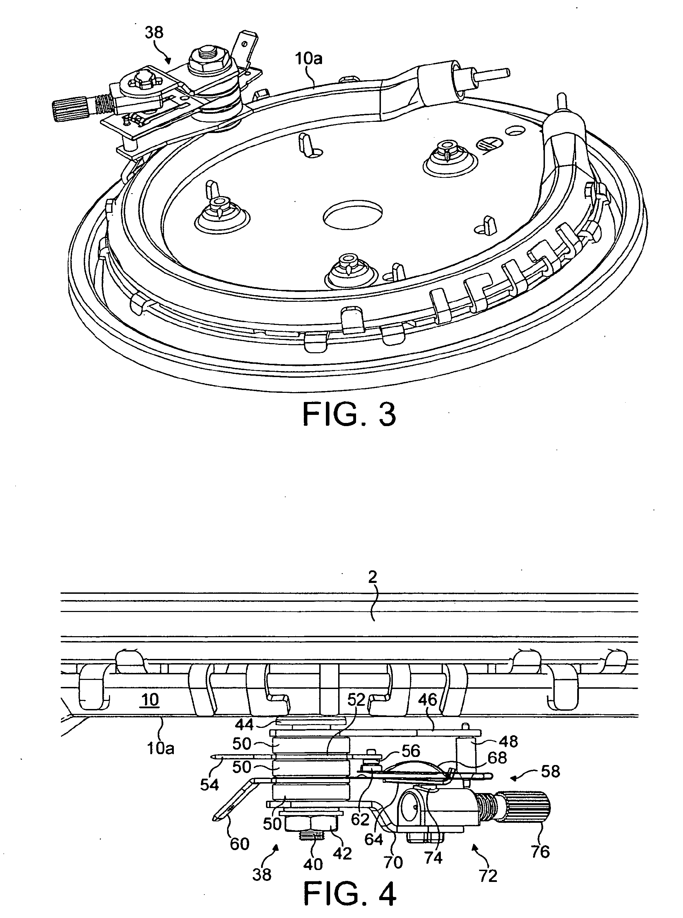

Fig. 3 shows a second embodiment of the invention.
This is similar to the first embodiment except that instead of the fixed temperature button thermostat shown in Fig. 1 there is provided a variable temperature snap-acting thermostat arrangement 38. This thermostat arrangement 38 is known in the art as an ironstat since it is commonly used to regulate the temperature of electric irons. It is connected in the electrical circuit in exactly the same way as the fixed temperature button stat and this side of the operation will not therefore be explained again. However, by reference to Fig. 4 operation of the thermostat itself will be explained briefly.

First it will be noted that the heater is shown in Fig. 4 in its normal, in-use orientation. Thus, the thermostat arrangement 38 is mounted to the flat underside 10a of the element beneath the heater plate 2. The thermostat arrangement 38 comprises a stack of components all mounted on a copper bolt 40 held on by a nut 42. The head of the bolt 44 is pressed against the flat underside 10a of the element so as to be in good thermal contact with it.

Moving downwardly in the stack, the first component is a generally rectangular bimetallic strip 46. At the proximal end of the bimetallic strip 46 is an aperture through which the bolt 40 passes and at the distal end it engages a linkage member 48.

Moving down the stack there is an electrically insulating spacer 50 followed by an electrical contact plate 52. The bolt 40 passes through (without touching) the centre of the plate 52 whilst at one end there is a spade terminal 54 and at the other a switch contact 56.

Below this is a second spacer 50 and below that a complex formed metal piece 58 which is a bistable leaf spring arrangement. At one end, the bistable leaf spring 58 has a spade terminal 60 and, moving right, the bolt 40 passes through it without touching. To the right of that, the spring 58 is formed into a horizontal elongate U-shape. At the distal end of the upper arm of the U is a second switch contact 62 which co-operates with the contact 56 on the electrical contact plate 52 above it. Each of the upper and lower arms of the U-shape have tongues cut out of them which are bent out of the plane and away from each other but both of which curve back so that the free ends of the two tongues engage one another. This occurs at the rightmost end as viewed from Fig. 4. The tongue 64 from the lower arm is generally straight with its end curved up at a right angle whereas the tongue 68 from the upper arm is curved upwardly into a curved profile.

The overall arrangement is such that the member 58 forms a bistable leaf spring which when pressed upon by the linkage member 48 snaps to the other configuration not shown in Fig. 4 to open the contacts 56,62 and when pulled upon by the linkage member 48 again snaps over-centre to close the contacts again.

Moving further down the stack there is a third spacer 50 and at the bottom of the stack is a mount plate 70 for mounting a screw-operated taper cam mechanism which moves a push-rod 74 bearing on the lower sprung tongue 64 slightly up or down depending upon the amount by which the rotary knob 76 is turned.

In operation, the bimetallic strip 46 is heated by the element 10 via the bolt head 44 which is in contact with the element. This causes it to bend downwardly and therefore bear on the bistable leaf spring 58 through the linkage member 48. When a certain temperature is reached, the leaf spring arrangement 58 snaps over-centre to open the set of contacts 56,62. This breaks the electrical path from the spade terminal 54 via the contacts 56,62 and the leaf spring member 58 itself to the second spade terminal 60.

As the bimetallic strip 46 cools, it will return to its planar state shown in Fig. 4 which will pull up the end of the bistable leaf spring 58 to snap it back to its original configuration and once again close the contacts 56,62. The operation of this arrangement is therefore functionally very similar to the button thermostat described with reference to the first embodiment. However, in this embodiment the reset temperature of the bistable arrangement may be altered by turning the rotary knob 76 to move the push rod 74 up or down to alter the bias on the leaf spring 58. As will be appreciated, this effectively allows the reset temperature of the thermostat arrangement 38 to be varied and so the temperature at which the water will be maintained also to be varied.

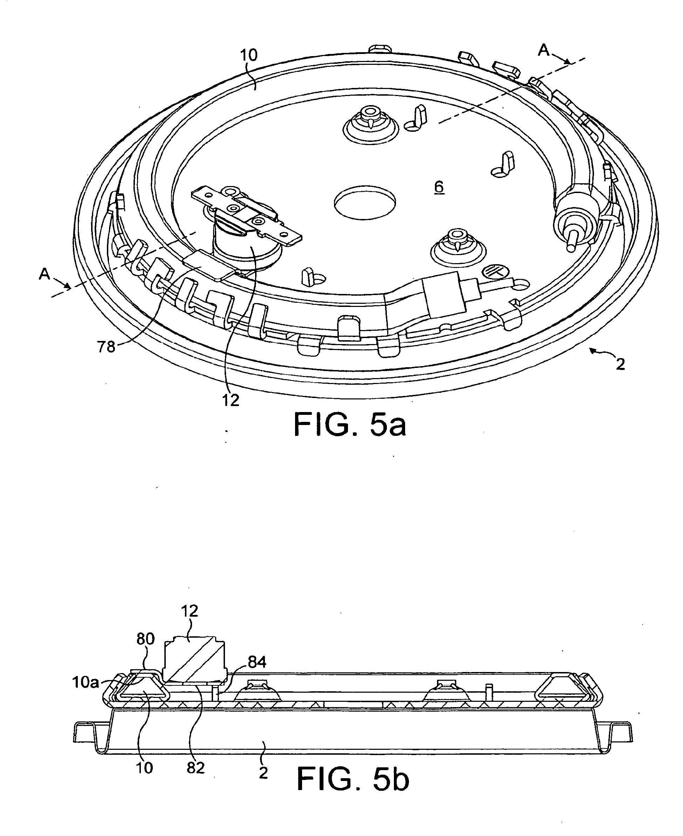

A third embodiment of the invention is shown in Figs. 5a and 5b. In this embodiment a buttonstat 12 is in direct thermal contact with the element 10; but by means of a thermal link 78 e.g. made of copper rather than by direct physical contact. As will be seen from Fig. 5b, the thermal link member 78 comprises a pair of parallel, vertically offset flanges 80,82. The upper flange 80 rests on the flat surface 10a of the heater; whereas the lower flange 82 receives the button stat 12. The lower flange 82 is supported off the diffuser plate 6 by a leg 84 so that neither the thermal link member 78 nor the buttonstat 12 is in good thermal contact with it.

The rest of the heater is identical to that of the first embodiment and thus no further explanation is required. Similarly the heater operates in exactly the same way as in the first embodiment. Of course it will be appreciated that such a thermal link could also be used with the thermostat of the second embodiment, or indeed any other thermostat.

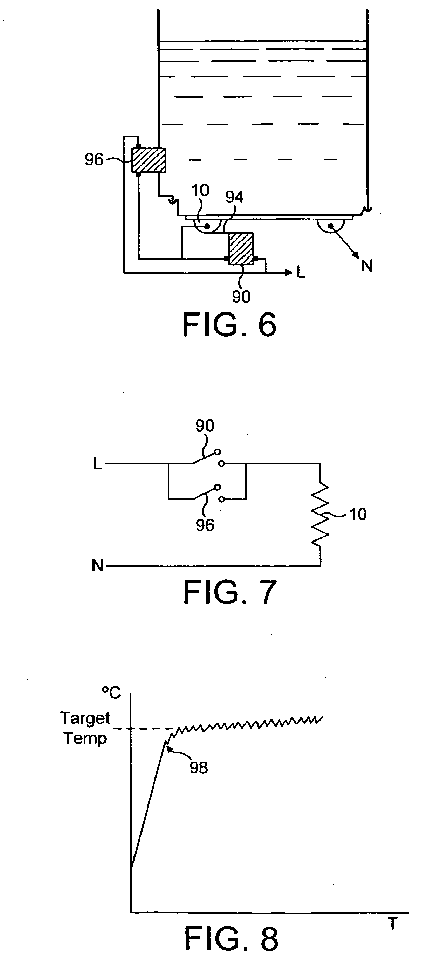

A further embodiment of the invention is shown schematically in Fig. 6. In this arrangement a cycling thermostat device 90 is arranged in good thermal contact with a heating element 10 by means of a thermal link 94 as in previous embodiments. However, the vessel is also provided with a second thermostatic device 96 which is mounted on a side wall of the vessel so as to be in good thermal contact with the water in the vessel.

As will be seen from Fig. 7, the two thermostatic devices 90,96 are provided electrically in parallel with one another, this parallel arrangement being in series with the line side of the mains electrical supply and the heating element 10. The reset temperature of the first thermostat 90 is set to be approximately the target temperature of the liquid in the vessel, e.g. say 85°C. The operating or break temperature of the second thermostat 96 is a few degrees below this. Since it is a manual reset device, a reset temperature is not defined.

Operation of this arrangement may be understood with reference to Fig. 8. As will be seen, initially the heater 10 will be energised via the contacts of the second thermostat 96 until its operation temperature is reached at point 98. This could, for example, be 80°C. Then the element 10 is switched off by the second thermostat 96 with thermal overshoot bringing the water to approximately the target temperature.

Thereafter, the temperature of the water in the vessel is regulated by the first thermostat 90 in the same manner described with reference to the previous embodiments although it will now be appreciated that the target water temperature is achieved more quickly since it is not necessary to heat all of the water to boiling and then wait for it to cool down to the target temperature; the water is brought rapidly to the target temperature and kept there.

## Claims

1. A heater for a liquid heating vessel comprising a heater plate (2) for closing an opening in the base of the vessel and a heating element (10) formed on or mounted to the underside of the heater plate (2), the heater further comprising an automatically resettable thermally sensitive actuator (12;38;90) arranged to reduce or interrupt power to said heating element (10) at a first temperature and to re-establish power at a second lower temperature, **characterised in that** said second temperature is below the boiling point of the liquid and wherein said actuator (12;38;90) is arranged in direct thermal contact with said heating element (10).

2. A heater as claimed in claim 1 further comprising a boiling sensitive control provided in parallel with the thermally sensitive actuator.

3. A heater as claimed in claim 1 or 2 further comprising a second thermal sensor (96), wherein said second sensor (96) is arranged, in use, to be in good thermal contact with the liquid in the vessel

4. A heater as claimed in claim 3 wherein said second sensor (96) has an associated second pair of switch contacts and is arranged to cause said switch contacts to open at a temperature below the reset temperature of said thermally sensitive actuator (90).

5. A heater as claimed in claim 4 wherein said thermally sensitive actuator (90) has an associated first pair of switch contacts and wherein said second pair of switch contacts is placed in parallel with said first pair of switch contacts.

6. A heater as claimed in claim 4 or 5 wherein said second pair of switch contacts is arranged to be latched open, requiring a manual reset.

7. A heater as claimed in any of claims 3-6 wherein said second sensor (96) comprises a thermally sensitive actuator.

8. A heater as claimed in any of claims 3-7 wherein said second sensor (96) is arranged, in use, in direct contact with the water in the vessel.

9. A heater as claimed in claim 8 wherein said second sensor (96) is mounted on or in a side wall of the vessel or on the base of the vessel outwardly of the heater.

10. A heater as claimed in any preceding claim wherein said automatically resettable thermally sensitive actuator (12;90) comprises a button thermostat.

11. A heater as claimed in any of claims 1-9 wherein said automatically resettable thermally sensitive actuator (38) comprises a variable thermostat arrangement.

12. A heater as claimed in claim 11 wherein said variable thermostat arrangement comprises a creep action bimetallic strip (46) operatively coupled with an over-centre bistable latch arrangement.

13. A heater as claimed in any preceding claim wherein said automatically resettable thermally sensitive actuator (12;38;90) is arranged in direct physical contact with said heating element (10).

14. A heater as claimed in any of claims 1-12 wherein said automatically resettable thermally sensitive actuator (38;90) is arranged in direct thermal contact with the heating element (10) by means of a thermal link (40;78).

15. A heater acclaimed in claim 14 wherein said thermal link (40;78) is in lesser thermal contact with the heater plate (2) than with the heating element (10).

16. A heater as claimed in any preceding claim wherein said heating element (10) comprises a sheathed heating element.

## Patentansprüche

1. Heizer bzw. Heizelement für ein Flüssigkeitsheizgefäß, der eine Heizplatte (2) zum Schließen einer Öffnung in der Basis des Gefäßes und ein Heizelement (10), das an oder befestigt zu der Unterseite der Heizplatte (2) ausgebildet ist, aufweist, wobei der Heizer ferner einen automatisch zurücksetzbaren thermisch empfindlichen Aktuator (12; 38; 90) aufweist, der eingerichtet ist, um die Energiezufuhr für das Heizelement (10) bei einer ersten Temperatur zu reduzieren oder auszusetzen und um die Energiezufuhr bei einer zweiten geringeren Temperatur wieder herzustellen, **dadurch gekennzeichnet, dass** die zweite Temperatur unterhalb des Siede- bzw. Kochpunktes der Flüssigkeit liegt und wobei der Aktuator (12; 38; 90) in direktem thermischen Kontakt mit dem Heizelement (10) angeordnet ist.

2. Heizer nach Anspruch 1, der ferner eine siedeempfindliche Steuerung aufweist, die parallel zu dem thermisch-empfindlichen Aktuator bereitgestellt ist.

3. Heizer nach einem der Ansprüche 1 oder 2, der ferner einen zweiten thermischen Sensor (96) aufweist, wobei der zweite Sensor (96) eingerichtet ist, bei der Verwendung mit der Flüssigkeit in dem Gefäß in guten thermischen Kontakt zu stehen.

4. Heizer nach Anspruch 3, wobei der zweite Sensor (96) ein zugehöriges zweites Paar an Schaltkontakten aufweist, und eingerichtet ist, um zu veranlassen, dass sich die Schaltkontakte bei einer Temperatur unterhalb der Rücksetzungstemperatur des thermisch empfindlichen Aktuators (90) öffnen.

5. Heizer nach Anspruch 4, wobei der thermisch empfindliche Aktuator (90) ein zugehöriges erstes Paar an Schaltkontakten aufweist und wobei das zweite Paar an Schaltkontakten parallel zu dem ersten Paar der Schaltkontakte angeordnet ist.

6. Heizer nach einem der Ansprüche 4 oder 5, wobei das zweite Paar an Schaltkontakten eingerichtet ist, um im offenen Zustand einzurasten bzw. offen eingerastet zu werden, was ein manuelles Zurücksetzen benötigt .

7. Heizer nach einem der Ansprüche 3 bis 6, wobei der zweite Sensor (96) einen thermischempfindlichen Aktuator aufweist.

8. Heizer nach einem der Ansprüche 3 bis 7, wobei der zweite Sensor (96) eingerichtet ist, bei der Verwendung in direktem Kontakt mit dem Wasser in dem Gefäß zu stehen.

9. Heizer nach Anspruch 8, wobei der zweite Sensor (96) an oder in einer Seitenwand des Gefäßes oder auf dem Boden des Gefäßes äußerlich bzw. außerhalb des Heizgeräts befestigt ist.

10. Heizer nach einem der vorstehenden Ansprüche, wobei der automatisch zurücksetzbare thermisch empfindliche Aktuator (12; 90) einen Knopf-Thermostat aufweist.

11. Heizer nach einem der Ansprüche 1 bis 9, wobei der automatisch zurücksetzbare thermisch empfindliche Aktuator (38) eine variable Thermostatanordnung aufweist.

12. Heizer nach Anspruch 11, wobei die variable Thermostatanordnung einen Bimetallstreifen (46) mit Kriechaktivität aufweist, der mit einer über der Mitte sich erstreckenden bzw. übermittigen bistabilen Verriegelungseinheit operativ verbunden ist.

13. Heizer nach einem der vorstehenden Ansprüche, wobei der automatisch zurücksetzbare thermisch empfindliche Aktuator (12; 38; 90) in direktem physikalischem bzw. physischen Kontakt mit dem Heizelement (10) angeordnet ist.

14. Heizer nach einem der Ansprüche 1 bis 12, wobei der automatisch zurücksetzbare thermisch empfindliche Aktuator (38; 90) mittels eines thermischen Anschlusses (40; 78) in direktem thermischem Kontakt mit dem Heizelement (10) angeordnet ist.

15. Heizgerät nach Anspruch 14, wobei der thermische Anschluss (40; 78) in geringerem bzw. schlechterem thermischen Kontakt mit der Heizplatte (2) als mit dem Heizelement (10) steht.

16. Heizgerät nach einem der vorsehenden Ansprüche, wobei das Heizelement (10) ein ummanteltes Heizelement aufweist.

## Revendications

1. Réchauffeur pour bouilloire comportant une plaque de réchauffage (2) pour fermer une ouverture dans la base de la bouilloire et un élément chauffant (10) formé sur le dessous de la plaque de réchauffeur (2) ou monté sur le dessous de celle-ci, le réchauffeur comportant en outre un actionneur thermiquement sensible réarmable automatiquement (12 ; 38 ; 90) agencé pour réduire ou interrompre l'alimentation dudit élément chauffant (10) à une première température et pour rétablir l'alimentation à une seconde température inférieure, **caractérisé en ce que** ladite seconde température se situe au-dessous du point d'ébullition du liquide et dans lequel ledit actionneur (12 ; 38, 90) est agencé en contact thermique directe avec ledit élément chauffant (10).

2. Réchauffeur selon la revendication 1, comportant en outre une unité de commande sensible à l'ébullition agencée en parallèle avec l'actionneur thermiquement sensible.

3. Réchauffeur selon la revendication 1 ou 2, comportant en outre un second capteur thermique (96), dans lequel ledit second capteur (96) est agencé, en utilisation, pour être en contact thermique satisfaisant avec le liquide dans la bouilloire.

4. Réchauffeur selon la revendication 3, dans lequel ledit second capteur (96) à une seconde paire associée de contacts d'interrupteur et est agencé pour amener lesdits contacts d'interrupteur à s'ouvrir à une température située au-dessous de la température de réarmement dudit actionneur thermiquement sensible (90).

5. Réchauffeur selon la revendication 4, dans lequel ledit actionneur thermiquement sensible (90) a une première paire associée de contacts d'interrupteur et dans lequel ladite seconde paire de contacts d'interrupteur est placée en parallèle avec ladite première paire de contacts d'interrupteur.

6. Réchauffeur selon la revendication 4 ou 5, dans lequel ladite seconde paire de contacts d'interrupteur est agencée pour être enclenchée ouverte, en nécessitant un réarmement manuel.

7. Réchauffeur selon l'une quelconque des revendications 3 à 6, dans lequel ledit second capteur (96) comporte un actionneur thermiquement sensible.

8. Réchauffeur selon l'une quelconque des revendications 3 à 7, dans lequel ledit second capteur (96) est agencé, en utilisation, en contact direct avec l'eau dans la bouilloire.

9. Réchauffeur selon la revendication 8, dans lequel ledit second capteur (96) est monté sur une paroi latérale ou dans une paroi latérale de la bouilloire ou sur la base de la bouilloire vers le bas du réchauffeur.

10. Réchauffeur selon l'une quelconque des revendications précédentes, dans lequel ledit actionneur thermiquement sensible réarmable automatiquement (12 ; 90) comporte un thermostat à bouton.

11. Réchauffeur selon l'une quelconque des revendications 1 à 9, dans lequel ledit actionneur thermiquement sensible réarmable automatiquement (38) comporte un agencement de thermostat variable.

12. Réchauffeur selon la revendication 11, dans lequel ledit agencement de thermostat variable comporte une barrette de connexion bimétallique à action de fluage (46) couplée de manière opérationnelle avec un agencement de circuit de verrouillage bistable décentré.

13. Réchauffeur selon l'une quelconque des revendications précédentes, dans lequel ledit actionneur thermiquement sensible réarmable automatiquement (12 ; 38 ; 90) est agencé en contact physique direct avec ledit élément chauffant (10).

14. Réchauffeur selon l'une quelconque des revendications 1 à 12, dans lequel ledit actionneur thermiquement sensible réarmable automatiquement (38 ; 90) est agencé en contact thermique direct avec l'élément chauffant (10) par l'intermédiaire d'une liaison thermique (40 ; 78).

15. Réchauffeur selon la revendication 14, dans lequel ladite liaison thermique (40 ; 78) est moins en contact thermique avec la plaque de réchauffeur (2) qu'avec l'élément chauffant (10).

16. Réchauffeur selon l'une quelconque des revendications précédentes, dans lequel ledit élément chauffant (10) comporte un élément chauffant blindé.
